# FASCICULE DE BREVET EUROPEEN

(11) **EP 3 824 049 B1**
(45) Date de publication et mention de la délivrance du brevet: **18.05.2022**
(21) Numéro de dépôt: 19736691.7
(22) Date de dépôt: 04.07.2019
(51) Int. Cl.: C10G 65/04, C10G 45/00, C10G 47/00, C10G 65/12, B01D 3/14, C10G 65/10

(54) **PROCEDE D'HYDROCRAQUAGE EN DEUX ETAPES UTILISANT UNE COLONNE DE DISTILLATION A CLOISON**
ZWEISTUFIGES HYDROCRACKVERFAHREN UNTER VERWENDUNG EINER GETEILTEN DESTILLATIONSKOLONNE
TWO-STEP HYDROCRACKING METHOD USING A PARTITIONED DISTILLATION COLUMN

(30) Priorité: 16.07.2018 FR 1856538
(43) Date de publication de la demande: 26.05.2021
(73) Titulaire: IFP Energies nouvelles, 92852 Rueil-Malmaison (FR)
(72) Inventeur: PLENNEVAUX, Thomas, 92852 RUEIL-MALMAISON CEDEX (FR); GUILLON, Emmanuelle, 92852 RUEIL-MALMAISON CEDEX (FR); COUDERC, Sophie, 92852 RUEIL-MALMAISON CEDEX (FR); BONDUELLE-SKRZYPCZAK, Audrey, 92852 RUEIL-MALMAISON CEDEX (FR)
(74) Mandataire: IFP Energies nouvelles
(86) Numéro de dépôt international: PCT/EP2019/068035
(87) Numéro de publication internationale: WO 2020/016023

(56) Documents cités:
- US-A1- 2001 042 699
- US-A1- 2009 050 524
- US-A1- 2012 080 288
- US-A1- 2012 145 513
- US-A1- 2014 262 941

## Description

### Domaine technique de l'invention

L'invention concerne un procédé d'hydrocraquage en deux étapes permettant d'éliminer les composés aromatiques polycycliques lourds (HPNA) sans diminuer le rendement en produits valorisables.

Les procédés d'hydrocraquage sont couramment utilisés en raffinerie pour transformer des mélanges hydrocarbonés en produits aisément valorisables. Ces procédés peuvent être utilisés pour transformer des coupes légères telles que par exemple des essences en coupes plus légères (LPG). Ils sont toutefois habituellement plutôt utilisés pour convertir des charges plus lourdes (telles que des coupes pétrolières ou synthétiques lourdes, par exemple des gasoils issus de distillation sous vide ou des effluents d'une unité Fischer-Tropsch) en essence ou naphta, kérosène, gasoil.

Certains procédés d'hydrocraquage permettent d'obtenir également un résidu fortement purifié pouvant constituer d'excellentes bases pour huiles. Un des effluents particulièrement ciblé par le procédé d'hydrocraquage est le distillat moyen (fraction qui contient la coupe gazole et la coupe kérosène), c'est-à-dire de coupes à point d'ébullition initial d'au moins 150°C et final allant jusqu'à avant le point d'ébullition initial du résidu, par exemple inférieur à 340°C, ou encore à 370°C.

L'hydrocraquage est un procédé qui tire sa flexibilité de trois éléments principaux qui sont, les conditions opératoires utilisées, les types de catalyseurs employés et le fait que l'hydrocraquage de charges hydrocarbonées peut être réalisé en une ou en deux étapes.

En particulier, l'hydrocraquage des distillats sous vide ou DSV permet de produire des coupes légères (Gasoil, Kérosène, naphtas,...) plus valorisables que le DSV lui-même. Ce procédé catalytique ne permet pas de transformer entièrement le DSV en coupes légères. Après fractionnement, il reste donc une proportion plus ou moins importante de fraction de DSV non convertie nommée UCO ou UnConverted Oil selon la terminologie anglo-saxonne. Pour augmenter la conversion, cette fraction non convertie peut être recyclée à l'entrée du réacteur d'hydrotraitement ou à l'entrée du réacteur d'hydrocraquage dans le cas où il s'agit d'un procédé d'hydrocraquage 1 étape ou à l'entrée d'un deuxième réacteur d'hydrocraquage traitant la fraction non convertie à l'issue de l'étape de fractionnement, dans le cas où il s'agit d'un procédé d'hydrocraquage 2 étapes.

Il est connu que le recycle de ladite fraction non convertie issue de l'étape de séparation vers la deuxième étape d'hydrocraquage d'un procédé 2 étapes conduit à la formation de composés aromatiques lourds (polycycliques) nommé HPNA durant les réactions de craquage et ainsi à l'accumulation indésirable desdits composés dans la boucle de recyclage, conduisant à la dégradation des performances du catalyseur de la 2ème étape d'hydrocraquage et/ou à son encrassement. Une purge est généralement installée sur le recycle de ladite fraction non convertie, en général sur la ligne en fond de fractionnement, afin de déconcentrer la boucle de recycle en composés HPNA, le débit de purge étant ajusté de manière à équilibrer leur débit de formation. En effet, plus les HPNA sont lourds, plus ils ont tendance à rester dans cette boucle, à s'accumuler, et à s'alourdir.

Or, la conversion d'un procédé d'hydrocraquage en deux étapes est directement liée à la quantité de produit lourds purgés en même temps que les HPNA.

En fonction des conditions opératoires du procédé, ladite purge peut être comprise entre 0 à 5% poids de la fraction lourde par rapport à la charge mère DSV entrante, et de préférence entre 0,5% à 3%poids. Le rendement en produits valorisables est donc réduit d'autant, ce qui constitue une perte économique non négligeable pour le raffineur.

Dans toute la suite du texte, les composés HPNA sont définis comme des composés aromatiques polycycliques ou polynucléaires qui comprennent donc plusieurs noyaux ou cycles benzéniques condensés. On les nomme habituellement HPA, Heavy Polynuclear Aromatics selon la terminologie anglo-saxonne, PNA ou HPNA. Ces composés formés lors de réactions secondaires indésirables, sont stables et quasiment impossible à hydrocraquer. Typiquement, les HPNA dits lourds sont des composés hydrocarbures aromatiques polycycliques constitués de plusieurs noyaux benzéniques fusionnés tels que par exemple le Coronène (composé à 24 carbones), le dibenzo(e,ghi) pérylène (26 carbones), le naphto[8,2,1,abc] coronène (30 carbones) et l'ovaléne (32 carbones), qui sont les composés les plus facilement identifiables et quantifiables par exemple par chromatographie.

### Art antérieur

La demande de brevet WO2016/102302 décrit un procédé de concentration des HPNA dans la fraction non convertie ou résidu afin de les éliminer et de réduire la quantité de résidu purgée pour augmenter la conversion mais aussi d'améliorer le rendement en produits valorisables en mettant en œuvre un soutirage latéral en dessous du point d'alimentation de la colonne de fractionnement, le flux soutiré présentant une faible concentration en HPNA et une proportion importante d'hydrocarbures non convertis dans la section d'hydrocraquage en amont. Un gaz de stripage peut également être injecté dans la section la plus basse de la colonne de fractionnement en dessous du plateau d'alimentation et au-dessus du point d'évacuation du résidu afin de stripper le résidu de distillation et ainsi de concentrer les composés les plus lourds dans ledit résidu avant de purger entièrement ledit résidu. Ceci permet de limiter la perte de rendement associée à la dilution des HPNA dans la purge.

Un second soutirage latéral d'un flux présentant une faible concentration en HPNA et une proportion importante d'hydrocarbures non convertis peut avantageusement être mis en œuvre entre le plateau d'alimentation et le plateau de soutirage de la fraction distillat la plus lourde. Ce second flux soutiré peut être stripé dans une colonne de strippage externe à la suite duquel tout ou partie de l'effluent gazeux séparé est recyclé dans la colonne et tout ou partie de l'effluent liquide est recyclé dans l'étape d'hydrocraquage. Dans ce procédé, aucune étape de recyclage du résidu non converti dans la colonne de fractionnement n'est mise en œuvre. Le résidu non converti n'est pas non plus recyclé dans l'étape d'hydrocraquage. Il est entièrement purgé.

Le brevet US8852404 décrit un procédé d'hydrocraquage de charges hydrocarbonées dans lequel une colonne de fractionnement comprenant une cloison verticale dans la section basse de ladite colonne, créant ainsi deux compartiments, permet la concentration des HPNA dans un des compartiments de ladite colonne, avant leur élimination ou purge, en utilisant ledit compartiment en tant que strippeur. L'objectif de cette mise en œuvre est d'utiliser la vapeur résultante de la section de strippage des HPNA dans ledit compartiment en tant que vapeur de strippage pour la zone de strippage de l'autre compartiment de la colonne de fractionnement, au lieu d'utiliser deux entrées de deux flux de vapeur de strippage différents dans ladite colonne. Ceci permet de limiter la perte de rendement associée à la dilution des HPNA dans la purge. US 2001/042699 A1 décrit un procédéde production de distillât moyens à partir d'une charge VGO comprenant au moins deux réacteurs dans lesquels l'hydrocraquage est de préférence réalisé dans le premier réacteur et l'hydrotraitement et/ou une autre étape d'hydrocraquage est de préférence réalisé dans le ou les réacteurs suivants. Le procédé selon ce document se caractérise par le fait que les effluents de réaction sont traités séparément en utilisant deux colonnes de distillation différentes ou une seule colonne de distillation comportant une cloison verticale pour éviter le recraquage des produits dans le but de réduire considérablement la consommation d'hydrogène pour réaliser la saturation des aromatiques des distillais moyens à basse température.

Le brevet US9580663 décrit un procédé d'hydrocraquage dans lequel les HPNA sont concentrés dans la fraction non convertie (UCO) de manière à ce qu'ils puissent être enlevés, ceci résultant en une conversion et en un rendement amélioré. En particulier, ledit brevet US9580663 décrit un procédé d'hydrocraquage dans lequel une partie de la fraction non convertie (UCO) issu du fond de la colonne de fractionnement, est strippé à contre-courant dans une colonne de stripage externe à ladite colonne de fractionnement, pour produire une fraction vapeur en tête de colonne de stripage qui est ensuite recyclée dans le fond de la colonne de fractionnement et une fraction liquide strippée concentrée en HPNA. Cette fraction liquide lourde concentrée en HPNA est au moins en partie purgée, l'autre partie de cette fraction pouvant être recyclée à la colonne de stripage. Ce procédé permet de concentrer les HPNA avant leur purge. La grande concentration en HPNA dans la fraction liquide lourde permet l'enlèvement des HPNA à un débit de purge inférieur, ce qui résulte en une conversion totale du procédé plus élevée avec l'obtention d'un rendement en produits valorisable amélioré.

Ces procédés ont apporté des améliorations dans la réduction des HPNA mais souvent au détriment des rendements en produits valorisables recherchés et des coûts.

Les travaux de recherche effectués par le demandeur l'ont conduit à découvrir que la mise en œuvre dans un procédé d'hydrocraquage en deux étapes, d'une étape de distillation dans laquelle une colonne de distillation à cloison est mise en œuvre, ladite cloison partitionnant uniquement la partie inférieure de ladite colonne en deux compartiments et étant située dans la section de la colonne au-dessous du point d'alimentation de ladite colonne par l'effluent liquide hydrocarboné issu de la première étape d'hydrocraquage, permettait de concentrer les HPNA dans un compartiment spécifique, délimité par ladite cloison au sein de la colonne et de les purger deux fois plus purs que dans un procédé ne mettant pas en œuvre ladite cloison.

En effet, la colonne de distillation est alimentée de part et d'autre de la cloison verticale, par l'effluent liquide hydrocarboné issu de la première étape d'hydrocraquage d'une part et par l'effluent liquide hydrocarboné issu de la seconde étape d'hydrocraquage d'autre part, permettant ainsi la concentration des HPNA contenus dans l'effluent issu de la seconde étape d'hydrocraquage dans un compartiment spécifique de la colonne délimité par ladite cloison et ainsi d'éviter la dilution desdits HPNA par l'effluent liquide hydrocarboné issu de la première étape d'hydrocraquage.

Ainsi, les HPNA peuvent être purgés plus purs. A iso débit partiel en HPNA, le flux de purge est plus faible. Or, la conversion d'un procédé d'hydrocraquage en deux étapes est directement liée à la quantité de produit lourds purgés en même temps que les HPNA. Augmenter la concentration en HPNA dans la purge diminue la quantité de produit non-converti extraits du procédé, maximisant ainsi la conversion totale du procédé.

Un autre avantage de l'invention est de fournir un procédé permettant d'augmenter la durée de cycle de la deuxième étape d'hydrocraquage à iso conversion totale du procédé.

### Objet de l'invention

En particulier, la présente invention concerne un procédé d'hydrocraquage en deux étapes de charges hydrocarbonées contenant au moins 20% volume et de préférence au moins 80% volume de composés bouillant au-dessus de 340°C, ledit procédé comprenant au moins les étapes suivantes :
a) Une étape d'hydrotraitement desdites charges en présence d'hydrogène et d'au moins un catalyseur d'hydrotraitement, à une température comprise entre 200 et 400°C, sous une pression comprise entre 2 et 16 MPa, à une vitesse spatiale comprise entre 0,2 et 5 h⁻¹ et à une quantité d'hydrogène introduite telle que le rapport volumique litre d'hydrogène/litre d'hydrocarbure soit compris entre 100 et 2000 L/L,
b) une étape d'hydrocraquage d'au moins une partie de l'effluent issu de l'étape a), l'étape b) d'hydrocraquage opérant, en présence d'hydrogène et d'au moins un catalyseur d'hydrocraquage, à une température comprise entre 250 et 480°C, sous une pression comprise entre 2 et 25 MPa, à une vitesse spatiale comprise entre 0,1 et 6 h⁻¹ et à une quantité d'hydrogène introduite telle que le rapport volumique litre d'hydrogène/litre d'hydrocarbure soit compris entre 80 et 5000 L/L,
c) une étape de séparation à haute pression de l'effluent issu de l'étape b) d'hydrocraquage pour produire au moins un effluent gazeux et un effluent hydrocarboné liquide,
d) une étape de distillation d'au moins une partie de l'effluent hydrocarboné liquide issu de l'étape c) mise en œuvre dans au moins une colonne de distillation comportant une cloison verticale dans le fond de ladite colonne, partitionnant le fond de ladite colonne en deux compartiments distincts, le premier compartiment et le deuxième compartiment, par introduction dudit effluent dans le premier compartiment, à un niveau inférieur ou égal à l'extrémité supérieure de ladite cloison, étape de laquelle il est soutiré :
   - éventuellement une fraction gazeuse,
   - éventuellement une fraction essence bouillant à une température inférieure à 150°C,
   - une fraction distillats moyens ayant un point d'ébullition compris entre 150 et 370°C, de préférence compris entre 150 et 350°C et de manière préférée compris entre 150 et 340°C, et
   - une fraction liquide non convertie ayant un point d'ébullition supérieur à 340°C et de préférence supérieur à 350°C et de manière préférée supérieur à 370°C, soutirée au niveau de l'extrémité inférieure dudit premier compartiment, et
   - une fraction liquide lourde non convertie contenant des HPNA, ayant un point d'ébullition supérieur à 340°C et de préférence supérieur à 350°C et de manière préférée supérieur à 370°C soutirée au niveau de l'extrémité inférieure dudit deuxième compartiment délimité par ladite cloison,
e) la purge d'au moins une partie de ladite fraction liquide lourde non convertie contenant des HPNA, ayant un point d'ébullition supérieur à 340°C et de préférence supérieur à 350°C et de manière préférée supérieur à 370°C, soutirée au niveau de l'extrémité inférieure dudit deuxième compartiment de la colonne de distillation de l'étape d),
f) une deuxième étape d'hydrocraquage d'au moins une partie de la fraction liquide non convertie ayant un point d'ébullition supérieur à 340°C et de préférence supérieur à 350°C et de manière préférée supérieur à 370°C issu de l'étape d) soutirée au niveau de l'extrémité inférieure dudit premier compartiment de la colonne de distillation, en mélange avec la partie non purgée de la fraction liquide lourde non convertie contenant des HPNA, ayant un point d'ébullition supérieur à 340°C et de préférence supérieur à 350°C et de manière préférée supérieur à 370°C issu de l'étape d), soutirée au niveau de l'extrémité inférieure dudit deuxième compartiment, ladite étape f) opérant en présence d'hydrogène et d'au moins un deuxième catalyseur d'hydrocraquage, à une température comprise entre 250 et 480°C, sous une pression comprise entre 2 et 25 MPa, à une vitesse spatiale comprise entre 0,1 et 6 h-1 et à une quantité d'hydrogène introduite telle que le rapport volumique litre d'hydrogène/litre d'hydrocarbure soit compris entre 100 et 2000 L/L,
g) une étape de séparation à haute pression de l'effluent issu de la deuxième étape f) d'hydrocraquage pour produire au moins un effluent gazeux et un effluent hydrocarboné liquide,
h) le recyclage dans le deuxième compartiment délimité par la cloison de ladite étape d) de distillation, d'au moins une partie dudit effluent hydrocarboné liquide issu de l'étape g), à un niveau inférieur à l'extrémité supérieure de ladite cloison.

### Description détaillée de l'invention

### Charges

La présente invention concerne un procédé d'hydrocraquage de charges hydrocarbonées appelées charge mère, contenant au moins 20% volume et de préférence au moins 80% volume de composés bouillant au-dessus de 340°C, de préférence au-dessus de 350°C et de manière préférée entre 340 et 580 °C (c'est-à-dire correspondant à des composés contenant au moins 15 à 20 atomes de carbone).

Lesdites charges hydrocarbonées peuvent avantageusement être choisies parmi les VGO (Vacuum gas oil) selon la terminologie anglo-saxonne ou distillats sous vide (DSV) tels que par exemple les gazoles issus de la distillation directe du brut ou d'unités de conversion telles que le FCC tels que le LCO ou Light Cycle Oil selon la terminologie anglo-saxonne, le coker ou la viscoréduction ainsi que des charges provenant d'unités d'extraction d'aromatiques des bases d'huile lubrifiante ou issues du déparaffinage au solvant des bases d'huile lubrifiante, ou encore des distillats provenant de désulfuration ou d'hydroconversion de RAT (résidus atmosphériques) et/ou de RSV (résidus sous vide), ou encore la charge peut avantageusement être une huile désasphaltée, ou des charges issues de la biomasse ou encore tout mélange des charges précédemment citées et de préférence, les VGO.

Les paraffines issues du procédé Fischer-Tropsch sont exclues.

En général, lesdites charges ont un point d'ébullition T5 supérieur à 340°C, et mieux encore supérieur à 370°C, c'est à dire que 95% des composés présents dans la charge ont un point d'ébullition supérieur à 340°C, et mieux encore supérieur à 370°C.

La teneur en azote des charges mères traitées dans le procédé selon l'invention est usuellement supérieure à 500 ppm poids, de préférence comprise entre 500 et 10000 ppm poids, de manière plus préférée entre 700 et 4000 ppm poids et de manière encore plus préférée entre 1000 et 4000 ppm poids. La teneur en soufre des charges mères traitées dans le procédé selon l'invention est usuellement comprise entre 0,01 et 5% poids, de manière préférée comprise entre 0,2 et 4% poids et de manière encore plus préférée entre 0,5 et 3 % poids.

La charge peut éventuellement contenir des métaux. La teneur cumulée en nickel et vanadium des charges traitées dans le procédé selon l'invention est de préférence inférieure à 1 ppm poids.

La teneur en asphaltènes est généralement inférieure à 3000 ppm poids, de manière préférée inférieure à 1000 ppm poids, de manière encore plus préférée inférieure à 200 ppm poids.

La charge peut éventuellement contenir des asphaltènes. La teneur en asphaltènes est généralement inférieure à 3000 ppm poids, de manière préférée inférieure à 1000 ppm poids, de manière encore plus préférée inférieure à 200 ppm poids.

Dans le cas où la charge contient des composés de type résines et/ou asphaltènes, il est avantageux de faire passer au préalable la charge sur un lit de catalyseur ou d'adsorbant différent du catalyseur d'hydrocraquage ou d'hydrotraitement.

### Etape a)

Conformément à l'invention, le procédé comprend une étape a) d'hydrotraitement desdites charges en présence d'hydrogène et d'au moins un catalyseur d'hydrotraitement, à une température comprise entre 200 et 450°C, sous une pression comprise entre 2 et 18 MPa, à une vitesse spatiale comprise entre 0,1 et 6 h⁻¹ et à une quantité d'hydrogène introduite telle que le rapport volumique litre d'hydrogène/litre d'hydrocarbure soit compris entre 100 et 2000 L/L.

Les conditions opératoires telles que température, pression, taux de recyclage d'hydrogène, vitesse spatiale horaire, pourront être très variables en fonction de la nature de la charge, de la qualité des produits désirés et des installations dont dispose le raffineur.

De préférence, l'étape a) d'hydrotraitement selon l'invention opère à une température comprise entre 250 et 450°C, de manière très préférée entre 300 et 430°C, sous une pression comprise entre 5 et 16 MPa, à une vitesse spatiale comprise entre 0,2 et 5 h⁻¹, et à une quantité d'hydrogène introduite telle que le rapport volumique litre d'hydrogène/litre d'hydrocarbure est compris entre 300 et 1500 L/L.

Des catalyseurs d'hydrotraitement classiques peuvent avantageusement être utilisés, de préférence qui contiennent au moins un support amorphe et au moins un élément hydro-déshydrogénant choisi parmi au moins un élément des groupes VIB et VIII non noble, et le plus souvent au moins un élément du groupe VIB et au moins un élément du groupe VIII non noble.

De préférence, le support amorphe est de l'alumine ou de la silice alumine.

Des catalyseurs préférés sont choisis parmi les catalyseurs NiMo, NiW ou CoMo sur alumine et NiMo ou NiW sur silice alumine.

L'effluent issu de l'étape d'hydrotraitement et entrant dans l'étape a) d'hydrocraquage comprend généralement une teneur en azote de préférence inférieure à 300 ppm poids et de préférence inférieure à 50 ppm poids.

### Etape b)

Conformément à l'invention, le procédé comprend une étape b) d'hydrocraquage d'au moins une partie de l'effluent issu de l'étape a), et de préférence la totalité, ladite étape b) opérant, en présence d'hydrogène et d'au moins un catalyseur d'hydrocraquage, à une température comprise entre 250 et 480°C, sous une pression comprise entre 2 et 25 MPa, à une vitesse spatiale comprise entre 0,1 et 6 h⁻¹ et à une quantité d'hydrogène introduite telle que le rapport volumique litre d'hydrogène/litre d'hydrocarbure soit compris entre 100 et 2000 L/L.

De préférence, l'étape b) d'hydrocraquage selon l'invention opère à une température comprise entre 320 et 450°C, de manière très préférée entre 330 et 435°C, sous une pression comprise entre 3 et 20 MPa, à une vitesse spatiale comprise entre 0,2 et 4 h⁻¹, et à une quantité d'hydrogène introduite telle que le rapport volumique litre d'hydrogène/litre d'hydrocarbure est compris entre 200 et 2000 L/L.

Dans un mode de réalisation permettant de maximiser la production de distillats moyens, les conditions opératoires utilisées dans le procédé selon l'invention permettent généralement d'atteindre des conversions par passe, en produits ayant des points d'ébullition inférieurs à 340°C, et mieux inférieurs à 370°C, supérieures à 15%poids et de manière encore plus préférée comprises entre 20 et 95%poids.

Dans un mode de réalisation permettant de maximiser la production de naphta, les conditions opératoires utilisées dans le procédé selon l'invention permettent généralement d'atteindre des conversions par passe, en produits ayant des points d'ébullition inférieurs à 190°C, et mieux inférieurs à 175°C, supérieures à 15%poids et de manière encore plus préférée comprises entre 20 et 95%poids.

Le procédé d'hydrocraquage selon l'invention couvre les domaines de pression et de conversion allant de l'hydrocraquage doux à l'hydrocraquage haute pression. On entend par hydrocraquage doux, un hydrocraquage conduisant à des conversions modérées, généralement inférieures à 40%, et fonctionnant à basse pression, de préférence entre 2 MPa et 6 MPa. L'hydrocraquage haute pression est généralement réalisé à des pressions plus fortes comprises entre 5MPa et 20MPa, de manière à obtenir des conversion supérieures à 50%.

Le procédé d'hydrocraquage selon l'invention est réalisé en deux étapes, indépendamment de la pression à laquelle ledit procédé est mis en œuvre. Il est réalisé en présence d'un ou plusieurs catalyseur(s) d'hydrocraquage, dans une ou plusieurs unité(s) réactionnelle(s) équipée(s) de un ou plusieurs réacteur(s) en lit fixe ou en lit bouillonnant, éventuellement séparé d'une ou plusieurs sections de séparation haute et/ou basse pression.

L'étape a) d'hydrotraitement et l'étape b) d'hydrocraquage peuvent avantageusement être réalisées dans un même réacteur ou dans des réacteurs différents. Dans le cas où elles sont réalisées dans un même réacteur, le réacteur comprend plusieurs lits catalytiques, les premiers lits catalytiques comprenant le ou les catalyseurs d'hydrotraitement et les lits catalytiques suivants comprenant le ou les catalyseurs d'hydrocraquage.

### Catalyseur de l'étape b) d'hydrocraquage

Les ou les catalyseurs d'hydrocraquage utilisés dans l'étape b) d'hydrocraquage sont des catalyseurs classiques d'hydrocraquage, de type bifonctionnel associant une fonction acide à une fonction hydrogénante et éventuellement au moins une matrice liante.

De préférence, le ou les catalyseurs d'hydrocraquage comprennent au moins un métal du groupe VIII choisi parmi le fer, le cobalt, le nickel, le ruthénium, le rhodium, le palladium et le platine et de préférence le cobalt et le nickel et/ou au moins un métal du groupe VIB choisi parmi le chrome, le molybdène et le tungstène, seul ou en mélange et de préférence parmi le molybdène et le tungstène.

Des fonctions hydrogénantes de type NiMo, NiMoW, NiW sont préférées.

De préférence, la teneur en métal du groupe VIII dans le ou les catalyseurs d'hydrocraquage est avantageusement comprise entre 0,5 et 15% poids et de préférence entre 2 et 10% poids, les pourcentages étant exprimés en pourcentage poids d'oxydes.

De préférence, la teneur en métal du groupe VIB dans le ou les catalyseurs d'hydrocraquage est avantageusement comprise entre 5 et 25% poids et de préférence entre 15 et 22% poids, les pourcentages étant exprimés en pourcentage poids d'oxydes.

Le ou les catalyseurs peuvent également éventuellement au moins un élément promoteur déposé sur le catalyseur et choisi dans le groupe formé par le phosphore, le bore et le silicium, éventuellement au moins un élément du groupe VIIA (chlore, fluor préférés), et éventuellement au moins un élément du groupe VIIB (manganèse préféré), éventuellement au moins un élément du groupe VB (niobium préféré).

De préférence, le ou les catalyseurs d'hydrocraquage comprennent une zéolithe choisies parmi les zéolithes USY, seule ou en combinaison, avec d'autres zéolithes parmi les zéolithes beta, ZSM-12, IZM-2, ZSM-22, ZSM-23, SAPO-11, ZSM-48, ZBM-30, seules ou en mélange. De manière préférée la zéolithe est la zéolithe USY seule.

Le ou les catalyseurs d'hydrocraquage peuvent éventuellement comprendre au moins une matrice minérale poreuse ou mal cristallisée de type oxyde choisie parmi les alumines, les silices, les silice-alumines, les aluminates, l'alumine-oxyde de bore, la magnésie, le silice-magnésie, le zircone, l'oxyde de titane, l'argile, seuls ou en mélange et de préférence l'alumine.

Un catalyseur préféré comprend et de préférence constitué d'au moins un métal du groupe VI et/ou au moins un métal du groupe VIII non noble, une zéolithe Y et un liant alumine.

Un catalyseur encore plus préféré comprend et est de préférence constitué du nickel, du molybdène, du phosphore, une zéolithe Y et de l'alumine.

Un autre catalyseur préféré comprend et est de préférence constitué de nickel, de tungstène, une zéolithe Y et de l'alumine ou de la silice alumine.

D'une façon générale, le ou les catalyseurs utilisés dans l'étape b) d'hydrocraquage renferme avantageusement :
- 0,1 à 60% poids de zéolite,
- 0,1 à 40% poids d'au moins un élément des groupes VIB et VIII (% oxyde)
- 0,1 à 99,8% poids de matrice (% oxyde)
- 0 à 20% poids d'au moins un élément choisi dans le groupe formé par P, B, Si (% oxyde), de préférence 0,1-20%
- 0 à 20% poids d'au moins un élément du groupe VIIA, de préférence 0,1 à 20%
- 0 à 20% poids d'au moins un élément du groupe VIIB, de préférence 0,1 à 20%
- 0 à 60% poids d'au moins un élément du groupe VB, de préférence 0,1 à 60% ;

Les pourcentages étant exprimés en pourcentage poids par rapport à la masse totale de catalyseur, la somme des pourcentages des éléments constituants ledit catalyseur étant égale à 100%

### Etape c)

Conformément à l'invention, le procédé comprend une étape c) de séparation à haute pression comprenant un moyen de séparation tel que par exemple un enchainement de ballons séparateurs à haute pression opérant entre 2 et 25MPa, dont le but est de produire un flux d'hydrogène qui est recyclé par l'intermédiaire d'un compresseur vers au moins une des étapes a), b) et/ou e), et un effluent hydrocarboné produit dans l'étape b) d'hydrocraquage qui est préférentiellement envoyé vers une étape de stripage à la vapeur opérant de préférence à une pression comprise entre 0,5 et 2 MPa, qui a pour but de réaliser une séparation de l'hydrogène sulfuré (H₂S) dissous d'au moins ledit effluent hydrocarboné produits durant l'étape b).

L'étape c) permet la production d'un effluent liquide hydrocarboné qui est ensuite envoyé dans l'étape d) de distillation.

### Etape d)

Conformément à l'invention, le procédé comprend une étape d) de distillation de l'effluent hydrocarboné liquide issu de l'étape c).

Selon l'invention, ladite étape d) de distillation est mise en œuvre dans au moins une colonne de distillation comportant une cloison verticale dans le fond de ladite colonne, partitionnant le fond de ladite colonne en deux compartiments distincts, un premier compartiment et un deuxième compartiment, et de préférence, au moins les deux tiers inférieurs de ladite colonne et de manière préférée au moins le tiers de ladite colonne.

La colonne de distillation opère à une pression comprise entre 0,1 et 0,4 MPa absolu.

Ladite cloison délimitant deux compartiments distincts est donc située à l'extrémité inférieure de ladite colonne.

La partie supérieure de la colonne ne comprenant pas de cloison est appelée compartiment de tête.

Selon l'invention, l'effluent hydrocarboné liquide séparé dans l'étape c) et issu de la première étape d'hydrocraquage b) est introduit dans le premier compartiment, à un niveau inférieur ou égal à l'extrémité supérieure de ladite cloison.

Le premier compartiment peut avantageusement comprendre entre 8 et 25 plateaux théoriques, avantageusement entre 12 et 20. Le deuxième compartiment peut avantageusement comprendre entre 8 et 25 plateaux théoriques, avantageusement entre 12 et 20.

L'effluent hydrocarboné liquide séparé dans l'étape c) et issu de la première étape d'hydrocraquage b) est alimenté à un plateau situé dans la moitié supérieure dudit premier compartiment. Ainsi, si par exemple le premier compartiment comprend 14 étages théoriques, ledit effluent est alimenté entre les plateaux 1 et 7, les plateaux étant numérotés dans le sens d'écoulement du liquide.

Conformément à l'invention, la colonne de distillation est alimentée de part et d'autre de la cloison verticale, d'une part par l'effluent liquide hydrocarboné issu de la première étape d'hydrocraquage b) via l'étape c) de séparation et d'autre part par l'effluent liquide hydrocarboné issu de la seconde étape d'hydrocraquage f) via l'étape g) de séparation, permettant ainsi la concentration des HPNA contenus dans l'effluent issu de la seconde étape d'hydrocraquage f) dans un compartiment spécifique de la colonne délimité par ladite cloison (le deuxième compartiment) et ainsi d'éviter la dilution desdits HPNA par l'effluent liquide hydrocarboné issu de la première étape d'hydrocraquage b) et séparé dans l'étape c).

Ladite étape d) de distillation permet de soutirer :
- éventuellement une fraction gazeuse, et éventuellement au moins une fraction essence bouillant à une température inférieure à 150°C,
- une fraction distillats moyens et de préférence une seule fraction distillat moyen ayant un point d'ébullition compris entre 150 et 370°C, de préférence compris entre 150 et 350°C et de manière préférée compris entre 150 et 340°C, et
- une fraction liquide non convertie dans les étapes a) et b), ayant un point d'ébullition supérieur à 340°C et de préférence supérieur à 350°C et de manière préférée supérieur à 370°C, soutirée au niveau de l'extrémité inférieure dudit premier compartiment, et
- une fraction liquide lourde non convertie dans la deuxième étape e) d'hydrocraquage contenant des HPNA, et ayant un point d'ébullition supérieur à 340°C et de préférence supérieur à 350°C et de manière préférée supérieur à 370°C, ladite fraction étant soutirée au niveau de l'extrémité inférieure dudit deuxième compartiment.

Les deux compartiments distincts intégrés dans une unique colonne de distillation atmosphérique et situés à l'extrémité inférieur de ladite colonne permettent de séparer la fraction liquide non convertie issu des étapes a) et b) d'une part et la fraction liquide non convertie issue de l'étape f) d'autre part. La présence de ladite paroi permet d'éviter le mélange de ces deux fractions non converties et donc la dilution des HPNA contenus dans ladite fraction liquide lourde non convertie dans la deuxième étape f) d'hydrocraquage par l'effluent liquide hydrocarboné issu de l'étape c) correspondant à l'effluent hydrocarboné liquide issu de la première étape d'hydrocraquage b).

### Etape e)

Conformément à l'invention, le procédé comprend une étape e) de purge d'au moins une partie de ladite fraction liquide lourde non convertie dans la deuxième étape f) d'hydrocraquage, contenant des HPNA, et soutirée au niveau de l'extrémité inférieure dudit deuxième compartiment de la colonne de distillation de l'étape d).

Le flux de purge est majoritairement composé de produits issus de la deuxième étape d'hydrocraquage f) via l'étape g) de séparation et n'est pas diluée par les molécules issues de la première étape d'hydrocraquage b). L'objectif de la purge est d'extraire autant de HPNA que ceux qui sont formés dans le procédé (surtout dans l'étape f). L'invention permet de ne pas diluer les HPNA et donc de purger du procédé moins de produits d'intérêts à iso débit partiel de HPNA purgés (et donc iso débit partiel de HPNA formés).

La mise en œuvre du procédé permet également d'augmenter la durée de cycle de la deuxième étape d'hydrocraquage à iso conversion totale du procédé.

### Etape f)

Conformément à l'invention, le procédé comprend une deuxième étape f) d'hydrocraquage d'au moins une partie et de préférence la totalité de la fraction liquide non convertie dans les étapes a) et b) et ayant un point d'ébullition supérieur à 340°C et de préférence supérieur à 350°C et de manière préférée supérieur à 370°C, soutirée au niveau de l'extrémité inférieure dudit premier compartiment de la colonne de distillation de l'étape d), en mélange avec la partie non purgée de la fraction liquide lourde non convertie dans l'étape e), ladite fraction contenant des HPNA, ayant un point d'ébullition supérieur à 340°C et de préférence supérieur à 350°C et de manière préférée supérieur à 370°C, et soutirée au niveau de l'extrémité inférieure dudit deuxième compartiment de la colonne de distillation de l'étape d).

De préférence, la charge de l'étape f) est uniquement constituée d'une partie et de préférence la totalité de la fraction liquide non convertie dans les étapes a) et b) et ayant un point d'ébullition supérieur à 340°C et de la partie non purgée de la fraction liquide lourde non convertie dans l'étape e), ladite fraction contenant des HPNA, ayant un point d'ébullition supérieur à 340°C.

De préférence la fraction distillat moyen soutirée dans l'étape d) de distillation n'est pas recyclée dans l'étape f) d'hydrocraquage.

Selon l'invention, ladite étape f) opérant en présence d'hydrogène et d'au moins un deuxième catalyseur d'hydrocraquage, à une température comprise entre 250 et 480°C, sous une pression comprise entre 2 et 25 MPa, à une vitesse spatiale comprise entre 0,1 et 6 h⁻¹ et à une quantité d'hydrogène introduite telle que le rapport volumique litre d'hydrogène/litre d'hydrocarbure soit compris entre 100 et 2000 L/L,

Le taux de recycle est défini comme étant le ratio massique entre le flux de charge entrant dans l'étape f) et la charge hydrocarbonée entrant dans ledit procédé (dans l'étape a) et est compris entre 0,2 et 4, de préférence entre 0,5 et 2.

De préférence, l'étape f) d'hydrocraquage selon l'invention opère à une température comprise entre 320 et 450°C, de manière très préférée entre 330 et 435°C, sous une pression comprise entre 3 et 20 MPa, et de manière très préférée entre 9 et 20 MPa, à une vitesse spatiale comprise entre 0,2 et 3 h-1, et à une quantité d'hydrogène introduite telle que le rapport volumique litre d'hydrogène/litre d'hydrocarbure est compris entre 100 et 2000 L/L.

Dans le mode de réalisation permettant de maximiser la production de distillats moyens, ces conditions opératoires utilisées dans l'étape f) du procédé selon l'invention permettent généralement d'atteindre des conversions par passe, en produits ayant des points d'ébullition inférieurs à 380°C, de préférence inférieurs à 370°C et de manière préférée inférieurs à 340°C, supérieures à 15%poids et de manière encore plus préférée comprises entre 20 et 80%poids. Néanmoins, la conversion par passe dans l'étape f) est généralement comprise entre 10 et 80% poids, de préférence entre 20 et 70% poids et de manière préférée entre 30 et 60% poids afin de maximiser la sélectivité du procédé en produit ayant des points d'ébullitions compris entre 150 et 370°C (distillats moyens). La conversion par passe est limitée par l'utilisation d'un taux de recycle élevé sur la boucle de deuxième étape d'hydrocraquage f). Ce taux est défini comme le ratio entre le débit d'alimentation de l'étape f) et le débit de la charge de l'étape a), préférentiellement ce ratio est compris entre 0,2 et 4, de manière préférée entre 0,5 et 2.

Dans le mode de réalisation permettant de maximiser la production de naptha, ces conditions opératoires utilisées dans l'étape f) du procédé selon l'invention permettent généralement d'atteindre des conversions par passe, en produits ayant des points d'ébullition inférieurs à 190°C, de préférence inférieurs à 175°C et de manière préférée inférieurs à 150°C, supérieures à 15%poids et de manière encore plus préférée comprises entre 20 et 80%poids. Néanmoins, la conversion par passe dans l'étape f) est maintenue faible afin de maximiser la sélectivité du procédé en produit ayant des points d'ébullitions compris entre 80 et 190°C (naptha). La conversion par passe est limitée par l'utilisation d'un taux de recycle élevé sur la boucle de deuxième étape d'hydrocraquage f). Ce taux est défini comme le ratio entre le débit d'alimentation de l'étape f) et le débit de la charge de l'étape a), préférentiellement ce ratio est compris entre 0,2 et 4, de manière préférée entre 0,5 et 2.

Conformément à l'invention, l'étape f) d'hydrocraquage opère en présence d'au moins un catalyseur d'hydrocraquage. De préférence, le catalyseur d'hydrocraquage de deuxième étape est choisi parmi les catalyseurs classiques d'hydrocraquage connus de l'Homme du métier. Le catalyseur d'hydrocraquage utilisé dans ladite étape f) peut être identique ou différent de celui utilisé dans l'étape b) et de préférence différent.

Les catalyseurs d'hydrocraquage utilisés dans les procédés d'hydrocraquage sont tous du type bifonctionnel associant une fonction acide à une fonction hydrogénante. La fonction acide est apportée par des supports de grandes surfaces (150 à 800 m².g-1 généralement) présentant une acidité superficielle, telles que les alumines halogénées (chlorées ou fluorées notamment), les combinaisons d'oxydes de bore et d'aluminium, les silice-alumines amorphes et les zéolithes. La fonction hydrogénante est apportée soit par un ou plusieurs métaux du groupe VIII de la classification périodique des éléments, soit par une association d'au moins un métal du groupe VIB de la classification périodique et au moins un métal du groupe VIII.

De préférence, le ou les catalyseurs d'hydrocraquage utilisé dans l'étape f) comprennent une fonction hydrogénante comprenant au moins un métal du groupe VIII choisi parmi le fer, le cobalt, le nickel, le ruthénium, le rhodium, le palladium et le platine et de préférence le cobalt et le nickel et/ou au moins un métal du groupe VIB choisi parmi le chrome, le molybdène et le tungstène, seul ou en mélange et de préférence parmi le molybdène et le tungstène.

De préférence, la teneur en métal du groupe VIII dans le ou les catalyseurs d'hydrocraquage est avantageusement comprise entre 0,5 et 15% poids et de préférence entre 2 et 10% poids, les pourcentages étant exprimés en pourcentage poids d'oxydes.

De préférence, la teneur en métal du groupe VIB dans le ou les catalyseurs d'hydrocraquage est avantageusement comprise entre 5 et 25% poids et de préférence entre 15 et 22% poids, les pourcentages étant exprimés en pourcentage poids d'oxydes.

Le ou les catalyseurs utilisés dans l'étape e) peuvent également éventuellement comprendre au moins un élément promoteur déposé sur le catalyseur et choisi dans le groupe formé par le phosphore, le bore et le silicium, éventuellement au moins un élément du groupe VIIA (chlore, fluor préférés), et éventuellement au moins un élément du groupe VIIB (manganèse préféré), éventuellement au moins un élément du groupe VB (niobium préféré).

De préférence, le ou les catalyseurs d'hydrocraquage utilisés dans l'étape e) comprennent une fonction acide choisie parmi l'alumine, la silice alumine et les zéolithes, de préférence choisies parmi les zéolithes Y et de préférence choisi parmi la silice alumine et les zéolithes.

Un catalyseur préféré utilisé dans l'étape e) comprend et de préférence constitué au moins un métal du groupe VI et/ou au moins un métal du groupe VIII non noble, une zéolithe Y et de l'alumine.

Un catalyseur encore plus préféré comprend et est de préférence constitué du nickel, du molybdène, une zéolithe Y et de l'alumine.

Un autre catalyseur préféré comprend et de est préférence constitué de nickel, de tungstène et de l'alumine ou de la silice alumine.

### Etape g)

Conformément à l'invention, le procédé comprend une étape g) de séparation à haute pression de l'effluent issu de la deuxième étape f) d'hydrocraquage, ladite étape comprenant un moyen de séparation tel que par exemple un enchainement de ballons séparateurs à haute pression opérant entre 2 et 25MPa, dont le but est de produire un flux d'hydrogène qui est recyclé par l'intermédiaire d'un compresseur vers au moins une des étapes a), b) et/ou f), et un effluent hydrocarboné produit dans l'étape f) d'hydrocraquage qui peut être optionnellement envoyé dans une étape de stripage à la vapeur opérant de préférence à une pression comprise entre 0,5 et 2 MPa, qui a pour but de réaliser une séparation de l'hydrogène sulfuré (H₂S) dissous d'au moins ledit effluent hydrocarboné produits durant l'étape f).

L'étape g) permet également la production d'un effluent liquide hydrocarboné qui est ensuite envoyé en tout ou partie dans la colonne de distillation de l'étape d) et en particulier dans le deuxième compartiment de l'étape d).

### Etape h)

Conformément à l'invention, ledit procédé comprend le recyclage dans le deuxième compartiment délimité par la cloison de ladite étape d) de distillation, d'au moins une partie et de préférence la totalité dudit effluent hydrocarboné liquide issu de l'étape g), à un niveau inférieur à l'extrémité supérieure de ladite cloison.

### Description de la figure

La charge DSV est introduite dans l'étape a) d'hydrotraitement via la conduite 1. L'effluent issu de l'étape a) via la conduite 2 est envoyé dans la première étape d'hydrocraquage b). L'effluent issu de l'étape b) via la conduite 3 est envoyé dans une étape de séparation haute pression c) de l'effluent issu de l'étape b) d'hydrocraquage pour produire au moins un effluent gazeux (non représenté sur la figure) et un effluent hydrocarboné liquide 4 qui est envoyé dans une étape d) de distillation mise en œuvre dans au moins une colonne de distillation comportant une cloison verticale (d1) dans le fond de ladite colonne, ladite cloison partitionnant la partie inférieure de ladite colonne en deux compartiments distincts (d') et (d"), par introduction dudit effluent dans un premier compartiment (d'), à un niveau égal à l'extrémité supérieure de ladite cloison.

Ladite étape de distillation permet de soutirer :
- une fraction gazeuse 5,
- une fraction essence bouillant à une température inférieure à 150°C, de préférence inférieure à 175°C dans le cas d'une procédé vidant à maximiser la production de naphta via la conduite 6,
- une fraction distillats moyens ayant un point d'ébullition compris entre 150 et 370°C, de préférence compris entre 150 et 350°C et de manière préférée compris entre 150 et 340°C, via la conduite 7
- une fraction liquide non convertie ayant un point d'ébullition supérieur à 340°C, soutirée au niveau de l'extrémité inférieure d'un premier compartiment (d') via la conduite 8, et
- une fraction liquide lourde non convertie contenant des HPNA, ayant un point d'ébullition supérieur à 340°C soutirée au niveau de l'extrémité inférieure d'un deuxième compartiment (d") délimité par ladite cloison, via la conduite 12.

Une purge d'une partie de ladite fraction liquide lourde non convertie contenant des HPNA, ayant un point d'ébullition supérieur à 340°C, est soutirée via la conduite 13 au niveau de l'extrémité inférieure dudit deuxième compartiment (d") de la colonne de distillation de l'étape d).

La totalité de la fraction liquide non convertie ayant un point d'ébullition supérieur à 340°C issu de l'étape d) soutirée au niveau de l'extrémité inférieure dudit premier compartiment (d') de la colonne de distillation, est envoyé dans la deuxième étape d'hydrocraquage f) en mélange avec la partie non purgée de la fraction liquide lourde non convertie contenant des HPNA, ayant un point d'ébullition supérieur à 340°C issu de l'étape d), soutirée au niveau de l'extrémité inférieure dudit deuxième compartiment (d"), via la conduite 9.

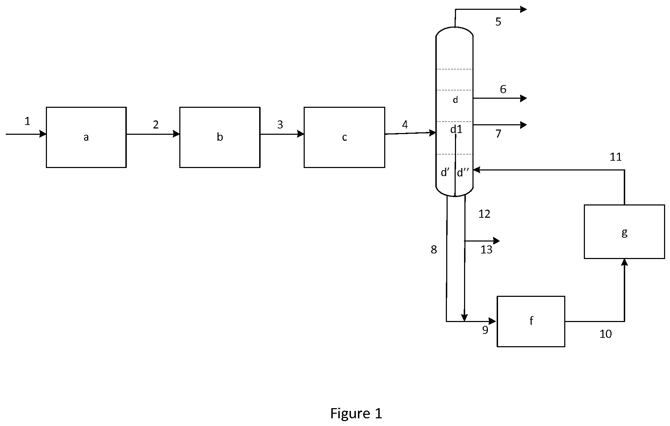

L'effluent issu de la deuxième étape f) d'hydrocraquage est envoyé dans une étape g) de séparation à haute pression via la conduite 10 pour produire au moins un effluent gazeux non représenté sur la figure 1 et un effluent hydrocarboné liquide via la conduite 11.

Ledit effluent hydrocarboné liquide est ensuite recyclé via la conduite 11 dans le deuxième compartiment (d") délimité par la cloison de ladite étape d) de distillation, à un niveau inférieur à l'extrémité supérieure de ladite cloison.

### Exemples - mode maximisation gazole

### Exemple 1 : non-conforme :

L'unité d'hydrocraquage traite une charge gazole sous vide (VGO) décrite dans le tableau 1 :

**Tableau 1**

| Type | | VGO |
|---|---|---|
| Débit | t/h | 49 |
| Densité | t/m³ | 0,92 |
| PI TBP | °C | 300 |
| PF TBP | °C | 552 |
| S | pds% | 2,18 |
| N | ppm pds | 1800 |

La charge VGO est injectée dans une étape de préchauffe puis dans un réacteur d'hydrotraitement dans les conditions suivantes énoncées dans le tableau 2 :

**Tableau 2**

| Réacteur | | R1 |
|---|---|---|
| Température | °C | 385 |
| Pression partielle H₂ | MPa | 14 NiMo sur alumine |
| Catalyseur | | |
| VVH | h-1 | 1,67 |

La catalyseur utilisé est un catalyseur CoMo sur alumine.

L'effluent de ce réacteur est ensuite mélangé à un flux d'hydrogène pour être refroidi puis est injecté dans un second réacteur dit d'hydrocraquage R2 opérant dans les conditions du tableau 3 :

**Tableau 3**

| Réacteur | | R2 |
|---|---|---|
| Température | °C | 390 |
| Pression partielle | | |
| H₂ | MPa | 12,5 Métal sur zéolithe |
| Catalyseur | | |
| VVH | h-1 | 3 |

La catalyseur utilisé est un catalyseur métal sur zéolithe.

R1 et R2 constituent la première étape de l'hydrocraqueur, l'effluent de R2 est ensuite envoyé dans une étape de séparation composée d'un train de récupération de chaleur puis de séparation à haute pression incluant un compresseur de recycle et permettant de séparer d'une part l'hydrogène, le sulfure d'hydrogène et l'ammoniaque et d'autre part l'effluent hydrocarboné liquide alimentant un strippeur puis une colonne de distillation atmosphérique afin de séparer des flux concentré en H₂S, naphta, keroséne, gazole à la spécification souhaitée, et un effluent liquide lourd non converti. La colonne de distillation atmosphérique n'est pas munie d'une cloison verticale dans sa section inférieure. Ledit effluent liquide lourd non converti est injecté dans un réacteur d'hydrocraquage R3 constituant la seconde étape d'hydrocraquage. Ce réacteur R3 est mis en œuvre dans les conditions suivantes énoncées dans le tableau 4 :

**Tableau 4**

| Réacteur | | R3 |
|---|---|---|
| Température | °C | 345 |
| Pression partielle | | |
| H₂ | MPa | 12,5 Métal sur silice-alumine amorphe |
| Catalyseur | | |
| VVH | h-1 | 3 |

La catalyseur utilisé est un catalyseur métal sur silice-alumine amorphe.

L'effluent de R3 est ensuite injecté dans l'étape de séparation à haute pression en aval de la première étape d'hydrocraquage. Le débit massique à l'entrée du réacteur R3 est égal au débit massique de la charge VGO, une purge correspondant à 2% massique du débit de la charge VGO est prise en fond de distillation sur le flux d'huile non-convertie.

La coupe distillat produit dans l'hydrocraqueur et récupérée de la colonne de distillation est conforme aux spécifications euro V, en particulier elle possède moins de 10ppm poids de soufre.

La concentration en HPNA dans la boucle de recycle est de 1000 ppm poids.

Le rendement en distillat moyens de ce procédé est de 85% massique, pour une conversion globale de 98% massique des hydrocarbures dont le point d'ébullition est supérieur à 380°C.

### Exemple 2 : conforme à l'invention

L'exemple 2 concerne un procédé d'hydrocraquage en deux étapes mis en œuvre dans les mêmes conditions et opérant la même charge que dans l'exemple 1 à la différence près que la colonne de disitillation comprend une cloison verticale dans le fond de ladite colonne, 2 plateaux réels au-dessus de l'injection de l'alimentation de ladite colonne et jusqu'au fond de la colonne, ladite cloison partitionnant ladite colonne en deux compartiments distincts. Dans l'exemple 2, le fond de la colonne de distillation atmosphérique est divisé en deux compartiements traitant d'un côté l'effluent liquide hydrocarboné venant de R2 et de l'autre côté l'effluent liquide hydrocarboné venant de R3.

Dans l'exemple 2, l'effluent hydrocarboné liquide strippé alimente un premier compartiment de ladite colonne de distillation atmosphérique. Ledit compartiment permet la séparation d'une fraction liquide non convertie dans les étapes d'hydrotraitement et d'hydrocraquage mises en œuvre dans R1 et R2, ayant un point d'ébullition de 340°C.

Cette fraction est soutirée au niveau de l'extrémité inférieure dudit premier compartiment et envoyée dans le réacteur d'hydrocraquage R3 constituant la seconde étape d'hydrocraquage, en mélange avec la partie non purgée de la fraction liquide non convertie dans R3 et ayant un point d'ébullition de 340°C.

L'effluent liquide hydrocarboné issu de R3 et après séparation à haute pression est recyclé dans le deuxième compartiment de la colonne de distillation atmosphérique

Ledit deuxième compartiment permet la séparation d'une fraction liquide non convertie dans l'étape d'hydrocraquage mise en œuvre dans R3, ayant un point d'ébullition de 340°C.

Ladite fraction liquide non convertie comprend des HPNA.

Dans l'exemple 2, la purge correspondant à 1% massique du débit de la charge VGO. Le débit de purge étant réduit de moitié, la concentration en HPNA dans la boucle de recycle est maintenue égale à celle de l'exemple 1. La concentration en HPNA dans la boucle de recycle est donc de 1000 ppm poids.

Ainsi, la durée de cycle catalytique est identique dans les deux exemples. Le rendement en distillat moyens de ce procédé est de 86% massique, pour une conversion globale de 99% massique des hydrocarbures dont le point d'ébullition est supérieur à 380°C.

## Revendications

1. Procédé d'hydrocraquage en deux étapes de charges hydrocarbonées contenant au moins 20% volume et de préférence au moins 80% volume de composés bouillant au-dessus de 340°C, ledit procédé comprenant au moins les étapes suivantes :
a) Une étape d'hydrotraitement desdites charges en présence d'hydrogène et d'au moins un catalyseur d'hydrotraitement, à une température comprise entre 200 et 400°C, sous une pression comprise entre 2 et 16 MPa, à une vitesse spatiale comprise entre 0,2 et 5 h⁻¹ et à une quantité d'hydrogène introduite telle que le rapport volumique litre d'hydrogène/litre d'hydrocarbure soit compris entre 100 et 2000 L/L,
b) une étape d'hydrocraquage d'au moins une partie de l'effluent issu de l'étape a), l'étape b) d'hydrocraquage opérant, en présence d'hydrogène et d'au moins un catalyseur d'hydrocraquage, à une température comprise entre 250 et 480°C, sous une pression comprise entre 2 et 25 MPa, à une vitesse spatiale comprise entre 0,1 et 6 h⁻¹ et à une quantité d'hydrogène introduite telle que le rapport volumique litre d'hydrogène/litre d'hydrocarbure soit compris entre 80 et 5000 L/L,
c) une étape de séparation à haute pression de l'effluent issu de l'étape b) d'hydrocraquage pour produire au moins un effluent gazeux et un effluent hydrocarboné liquide,
d) une étape de distillation d'au moins une partie de l'effluent hydrocarboné liquide issu de l'étape c) mise en œuvre dans au moins une colonne de distillation comportant une cloison verticale dans le fond de ladite colonne, partitionnant le fond de ladite colonne en deux compartiments distincts, le premier compartiment et le deuxième compartiment, par introduction dudit effluent dans le premier compartiment, à un niveau inférieur ou égal à l'extrémité supérieure de ladite cloison, étape de laquelle il est soutiré :
- éventuellement une fraction gazeuse,
- éventuellement au moins une fraction essence bouillant à une température inférieure à 150°C,
- une fraction distillats moyens ayant un point d'ébullition compris entre 150 et 370°C, de préférence compris entre 150 et 350°C et de manière préférée compris entre 150 et 340°C, et
- une fraction liquide non convertie ayant un point d'ébullition supérieur à 340°C, soutirée au niveau de l'extrémité inférieure dudit premier compartiment, et
- une fraction liquide lourde non convertie contenant des HPNA, ayant un point d'ébullition supérieur à 340°C soutirée au niveau de l'extrémité inférieure dudit deuxième compartiment délimité par ladite cloison,
e) la purge d'au moins une partie de ladite fraction liquide lourde non convertie contenant des HPNA, ayant un point d'ébullition supérieur à 340°C, soutirée au niveau de l'extrémité inférieure dudit deuxième compartiment de la colonne de distillation de l'étape d),
f) une deuxième étape d'hydrocraquage d'au moins une partie de la fraction liquide non convertie ayant un point d'ébullition supérieur à 340°C issu de l'étape d) soutirée au niveau de l'extrémité inférieure dudit premier compartiment de la colonne de distillation, en mélange avec la partie non purgée de la fraction liquide lourde non convertie contenant des HPNA, ayant un point d'ébullition supérieur à 340°C issu de l'étape d), soutirée au niveau de l'extrémité inférieure dudit deuxième compartiment, ladite étape f) opérant en présence d'hydrogène et d'au moins un deuxième catalyseur d'hydrocraquage, à une température comprise entre 250 et 480°C, sous une pression comprise entre 2 et 25 MPa, à une vitesse spatiale comprise entre 0,1 et 6 h-1 et à une quantité d'hydrogène introduite telle que le rapport volumique litre d'hydrogène/litre d'hydrocarbure soit compris entre 100 et 2000 L/L,
g) une étape de séparation à haute pression de l'effluent issu de la deuxième étape f) d'hydrocraquage pour produire au moins un effluent gazeux et un effluent hydrocarboné liquide,
h) le recyclage dans le deuxième compartiment délimité par la cloison de ladite étape d) de distillation, d'au moins une partie dudit effluent hydrocarboné liquide issu de l'étape g), à un niveau inférieur à l'extrémité supérieure de ladite cloison.

2. Procédé selon la revendication 1 dans lequel lesdites charges hydrocarbonées sont choisies parmi les VGO selon la terminologie anglo-saxonne ou distillats sous vide (DSV) tels que les gazoles issus de la distillation directe du brut ou d'unités de conversion telles que le FCC le coker ou la viscoréduction ainsi que des charges provenant d'unités d'extraction d'aromatiques des bases d'huile lubrifiante ou issues du déparaffinage au solvant des bases d'huile lubrifiante, ou encore des distillats provenant de désulfuration ou d'hydroconversion de RAT (résidus atmosphériques) et/ou de RSV (résidus sous vide), ou encore parmi les huiles désasphaltées, ou des charges issues de la biomasse ou encore tout mélange des charges précédemment citées.

3. Procédé selon l'une des revendications 1 ou 2 dans lequel l'étape a) d'hydrotraitement opère à une température comprise entre 300 et 430°C, sous une pression comprise entre 5 et 16 MPa, à une vitesse spatiale comprise entre 0,2 et 5 h-1, et à une quantité d'hydrogène introduite telle que le rapport volumique litre d'hydrogène/litre d'hydrocarbure est compris entre 300 et 1500 L/L.

4. Procédé selon l'une des revendications 1 à 3 dans lequel l'étape b) d'hydrocraquage opère à une température comprise entre 330 et 435°C, sous une pression comprise entre 3 et 20 MPa, à une vitesse spatiale comprise entre 0,2 et 4 h-1, et à une quantité d'hydrogène introduite telle que le rapport volumique litre d'hydrogène/litre d'hydrocarbure est compris entre 200 et 2000 L/L.

5. Procédé selon l'une des revendications 1 à 4 dans lequel la colonne de distillation de l'étape d) opère à une pression comprise entre 0,1 et 0,4 MPa absolu.

6. Procédé selon l'une des revendications 1 à 5 dans lequel l'étape f) d'hydrocraquage opère à une température comprise entre 330 et 435°C, sous une pression comprise entre 9 et 20 MPa, à une vitesse spatiale comprise entre 0,2 et 3 h-1, et à une quantité d'hydrogène introduite telle que le rapport volumique litre d'hydrogène/litre d'hydrocarbure est compris entre 100 et 2000 L/L.

7. Procédé selon l'une des revendications 1 à 6 dans lequel le catalyseur d'hydrocraquage utilisé dans ladite étape f) est identique ou différent de celui utilisé dans l'étape b).

## Patentansprüche

1. Zwei-Schritt-Verfahren zum Hydrocracking von Kohlenwasserstoffbeschickungen, die mindestens 20 Vol.-% und vorzugsweise mindestens 80 Vol.-% an Verbindungen enthalten, die bei über 340 °C sieden, wobei das Verfahren mindestens die folgenden Schritte umfasst:
a) einen Schritt der Hydrodesulfurierung der Beschickungen in Gegenwart von Wasserstoff und mindestens eines Hydrodesulfurierungskatalysators bei einer Temperatur zwischen 200 und 400 °C unter einem Druck zwischen 2 und 16 MPa bei einer Raumgeschwindigkeit von zwischen 0,2 und 5 h⁻¹ und bei einer derartigen Menge an eingebrachtem Wasserstoff, dass das Volumenverhältnis Liter Wasserstoff/Liter Kohlenwasserstoff zwischen 100 und 2000 1/1 beträgt,
b) einen Schritt des Hydrocracking mindestens eines Teils des Ausstroms aus Schritt a), wobei der Hydrocrackingschritt b) in Gegenwart von Wasserstoff und mindestens einem Hydrocrackingkatalysator bei einer Temperatur zwischen 250 und 480 °C unter einem Druck zwischen 2 und 25 MPa bei einer Raumgeschwindigkeit zwischen 0,1 und 6 h⁻¹ und bei einer derartigen eingebrachten Menge an Wasserstoff, dass das Volumenverhältnis Liter Wasserstoff/Liter Kohlenwasserstoff zwischen 80 und 5000 1/1 beträgt, durchgeführt wird,
c) einen Schritt der Hochdrucktrennung des Ausstroms aus dem Hydrocrackingschritt b), um mindestens einen gasförmigen Ausstrom und einen flüssigen Kohlenwasserstoffausstrom zu erzeugen,
d) einen Schritt der Destillation mindestens eines Teils des flüssigen Kohlenwasserstoffausstroms aus Schritt c), der in mindestens einer Destillierkolonne mit einer vertikalen Trennwand am Boden der Kolonne, die den Boden der Kolonne in zwei getrennte Kompartimente, das erste Kompartiment und das zweite Kompartiment, unterteilt, durch Einbringen des Ausstroms in das erste Kompartiment in einer Höhe, die niedriger als das oder gleich dem oberen Ende der Trennwand ist, durchgeführt wird, wobei aus diesem Schritt Folgendes abgezogen wird:
- gegebenenfalls eine gasförmige Fraktion,
- gegebenenfalls mindestens eine Benzinfraktion, die bei einer Temperatur unter 150 °C siedet,
- eine Mitteldestillatefraktion mit einem Siedepunkt zwischen 150 und 370 °C, vorzugsweise zwischen 150 und 350 °C und bevorzugt zwischen 150 und 340 °C, und
- eine nicht umgewandelte flüssige Fraktion mit einem Siedepunkt von über 340 °C, die in Höhe des unteren Endes des ersten Kompartiments abgezogen wird, und
- eine nicht umgewandelte, schwere, HPNA enthaltende flüssige Fraktion, die einen Siedepunkt von über 340 °C besitzt und in Höhe des unteren Endes des zweiten durch die Trennwand abgegrenzten Kompartiments abgezogen wird,
e) Spülen mindestens eines Teils der nicht umgewandelten, schweren, HPNA enthaltenden flüssigen Fraktion mit einem Siedepunkt von über 340 °C, die in Höhe des unteren Endes des zweiten Kompartiments der Destillierkolonne von Schritt d) abgezogen wurde,
f) einen zweiten Schritt des Hydrocracking mindestens eines Teils der nicht umgewandelten flüssigen Fraktion mit einem Siedepunkt von über 340 °C aus Schritt d), die in Höhe des unteren Endes des ersten Kompartiments der Destillierkolonne abgezogen wurde, im Gemisch mit dem nicht gespülten Teil der nicht umgewandelten, schweren, HPNA enthaltenden flüssigen Fraktion mit einem Siedepunkt von über 340 °C aus Schritt d), die in Höhe des unteren Endes des zweiten Kompartiments abgezogen wurde, wobei Schritt f) in Gegenwart von Wasserstoff und mindestens einem zweiten Hydrocrackingkatalysator bei einer Temperatur zwischen 250 und 480 °C unter einem Druck zwischen 2 und 25 MPa bei einer Raumgeschwindigkeit zwischen 0,1 und 6 h⁻¹ und bei einer derartigen Menge an eingebrachtem Wasserstoff, dass das Volumenverhältnis Liter Wasserstoff/Liter Kohlenwasserstoff zwischen 100 und 2000 1/1 beträgt, durchgeführt wird,
g) einen Schritt der Hochdrucktrennung des Ausstroms aus dem zweiten Hydrocrackingschritt f), um mindestens einen gasförmigen Ausstrom und einen flüssigen Kohlenwasserstoffausstrom zu erzeugen,
h) Rückführen mindestens eines Teils des flüssigen Kohlenwasserstoffausstroms aus Schritt g) in das zweite, durch die Trennwand abgegrenzte Kompartiment des Destillationsschritts d) in einer Höhe, die niedriger ist als das obere Ende der Trennwand.

2. Verfahren nach Anspruch 1, wobei die Kohlenwasserstoffbeschickungen ausgewählt sind aus VGO gemäß der angelsächsischen Terminologie oder Vakuumdestillaten (VD), wie Gasölen aus der direkten Destillation von Rohöl oder aus Umwandlungsanlagen, wie FCC-, Koker- oder Visbreaking-Anlagen, sowie Beschickungen aus Anlagen zur Extraktion von Aromaten aus Schmierölbasen oder aus der Lösungsmittelentparaffinierung von Schmierölbasen oder auch Destillate aus der Entschwefelung oder Hydrokonversion von AR (atmosphärischen Rückständen) und/oder VR (Vakuumrückständen) oder auch aus entasphaltierten Ölen oder aus Biomasse stammenden Beschickungen oder auch jedem beliebigen Gemisch der vorstehend genannten Beschickungen.

3. Verfahren nach einem der Ansprüche 1 oder 2, wobei der Hydrodesulfurierungsschritt a) bei einer Temperatur zwischen 300 und 430 °C unter einem Druck zwischen 5 und 16 MPa bei einer Raumgeschwindigkeit zwischen 0,2 und 5 h⁻¹ und bei einer derartigen Menge an eingebrachtem Wasserstoff, dass das Volumenverhältnis Liter Wasserstoff/Liter Kohlenwasserstoff zwischen 300 und 1500 1/1 beträgt, durchgeführt wird.

4. Verfahren nach einem der Ansprüche 1 bis 3, wobei der Hydrocrackingschritt b) bei einer Temperatur zwischen 330 und 435 °C unter einem Druck zwischen 3 und 20 MPa bei einer Raumgeschwindigkeit zwischen 0,2 und 4 h⁻¹ und bei einer derartigen Menge an eingebrachtem Wasserstoff, dass das Volumenverhältnis Liter Wasserstoff/Liter Kohlenwasserstoff zwischen 200 und 2000 1/1 beträgt, durchgeführt wird.

5. Verfahren nach einem der Ansprüche 1 bis 4, wobei die Destillierkolonne von Schritt d) bei einem Druck zwischen 0,1 und 0,4 MPa absolut betrieben wird.

6. Verfahren nach einem der Ansprüche 1 bis 5, wobei der Hydrocrackingschritt f) bei einer Temperatur zwischen 330 und 435 °C unter einem Druck zwischen 9 und 20 MPa bei einer Raumgeschwindigkeit zwischen 0,2 und 3 h⁻¹ und bei einer derartigen Menge an eingebrachtem Wasserstoff, dass das Volumenverhältnis Liter Wasserstoff/Liter Kohlenwasserstoff zwischen 100 und 2000 1/1 beträgt, durchgeführt wird.

7. Verfahren nach einem der Ansprüche 1 bis 6, wobei der in Schritt f) verwendete Hydrocrackingkatalysator mit dem in Schritt b) verwendeten identisch oder verschieden davon ist.

## Claims

1. Two-step process for the hydrocracking of hydrocarbon feedstocks containing at least 20% by volume and preferably at least 80% by volume of compounds boiling above 340°C, said process comprising at least the following steps:
a) a step of hydrotreating said feedstocks in the presence of hydrogen and at least one hydrotreating catalyst, at a temperature of between 200°C and 400°C, under a pressure of between 2 and 16 MPa, at a space velocity of between 0.2 and 5 h⁻¹ and with an amount of hydrogen introduced such that the liter of hydrogen/liter of hydrocarbon ratio by volume is between 100 and 2000 1/1,
b) a step of hydrocracking at least one portion of the effluent from step a), the hydrocracking step b) taking place, in the presence of hydrogen and at least one hydrocracking catalyst, at a temperature of between 250°C and 480°C, under a pressure of between 2 and 25 MPa, at a space velocity of between 0.1 and 6 h⁻¹ and with an amount of hydrogen introduced such that the liter of hydrogen/liter of hydrocarbon ratio by volume is between 80 and 5000 1/1,
c) a step of separating at high pressure the effluent from the hydrocracking step b) to produce at least a gaseous effluent and a liquid hydrocarbon effluent,
d) a step of distilling at least one portion of the liquid hydrocarbon effluent from step c) carried out in at least one distillation column comprising a vertical dividing wall in the bottom of said column, dividing the bottom of said column into two separate compartments, the first compartment and the second compartment, by introducing said effluent into the first compartment, at a level lower than or equal to the upper end of said dividing wall, from which step the following are withdrawn:
- optionally a gaseous fraction,
- optionally at least one gasoline fraction boiling at a temperature below 150°C,
- a middle distillates fraction having a boiling point between 150°C and 370°C, preferably between 150°C and 350°C and in a preferred manner between 150°C and 340°C,
- an unconverted liquid fraction having a boiling point greater than 340°C, withdrawn at the level of the lower end of said first compartment, and
- an unconverted heavy liquid fraction containing HPNAs, having a boiling point greater than 340°C, withdrawn at the level of the lower end of said second compartment delimited by said dividing wall,
e) the purge of at least one portion of said unconverted heavy liquid fraction containing HPNAs, having a boiling point greater than 340°C, withdrawn at the level of the lower end of said second compartment of the distillation column of step d),
f) a second step of hydrocracking at least one portion of the unconverted liquid fraction having a boiling point greater than 340°C from step d) withdrawn at the level of the lower end of said first compartment of the distillation column, mixed with the unpurged portion of the unconverted heavy liquid fraction containing HPNAs, having a boiling point greater than 340°C from step d), withdrawn at the level of the lower end of said second compartment, said step f) operating in the presence of hydrogen and of at least a second hydrocracking catalyst, at a temperature of between 250 and 480°C, under a pressure of between 2 and 25 MPa, at a space velocity between 0.1 and 6 h⁻¹ and with an amount of hydrogen introduced such that the liter of hydrogen/liter of hydrocarbon ratio by volume is between 100 and 2000 1/1,
g) a step of separating at high pressure the effluent from the second hydrocracking step f) to produce at least a gaseous effluent and a liquid hydrocarbon effluent,
h) recycling into the second compartment delimited by the dividing wall of said distillation step d), at least one portion of said liquid hydrocarbon effluent from step g), at a level below the upper end of said dividing wall.

2. Process according to Claim 1, wherein said hydrocarbon feedstocks are chosen from VGOs or vacuum distillates (VDs), such as the gas oils resulting from the direct distillation of crude or from conversion units, such as FCC, coker or visbreaking units, and also feedstocks originating from units for the extraction of aromatics from lubricating oil bases or resulting from the solvent dewaxing of lubricating oil bases, or else distillates originating from the desulfurization or hydroconversion of ATRs (atmospheric residues) and/or VRs (vacuum residues), or else from deasphalted oils, or feedstocks resulting from biomass or else any mixture of the abovementioned feedstocks.

3. Process according to either of Claims 1 and 2, wherein the hydrotreating step a) is carried out at a temperature of between 300°C and 430°C, under a pressure of between 5 and 16 MPa, at a space velocity of between 0.2 and 5 h⁻¹ and with an amount of hydrogen introduced such that the liter of hydrogen/liter of hydrocarbon ratio by volume is between 300 and 1500 1/1.

4. Process according to one of Claims 1 to 3, wherein the hydrocracking step b) is carried out at a temperature of between 330°C and 435°C, under a pressure of between 3 and 20 MPa, at a space velocity of between 0.2 and 4 h⁻¹ and with an amount of hydrogen introduced such that the liter of hydrogen/liter of hydrocarbon ratio by volume is between 200 and 2000 1/1.

5. Process according to one of Claims 1 to 4, wherein the distillation column of step d) operates at a pressure of between 0.1 and 0.4 MPa absolute.

6. Process according to one of Claims 1 to 5, wherein the hydrocracking step f) is carried out at a temperature of between 330°C and 435°C, under a pressure of between 9 and 20 MPa, at a space velocity of between 0.2 and 3 h⁻¹ and with an amount of hydrogen introduced such that the liter of hydrogen/liter of hydrocarbon ratio by volume is between 100 and 2000 1/1.

7. Process according to one of Claims 1 to 6, wherein the hydrocracking catalyst used in said step f) is identical to or different from that used in step b).
